# EUROPEAN PATENT SPECIFICATION

(11) **EP 1 186 224 B1**
(45) Date of publication and mention of the grant of the patent: **21.07.2004**
(21) Application number: 01500040.9
(22) Date of filing: 16.02.2001
(51) Int. Cl.: A01D 46/26

(54) **Machine for harvesting tree fruit**
Erntemaschine für Früchte
Machine pour la récolte des fruits

(30) Priority: 08.09.2000 ES 200002278 U; 24.11.2000 ES 200002889 U
(43) Date of publication of application: 13.03.2002
(73) Proprietor: Tenias, S.A., 50600 Ejea de los Caballeros (Zaragoza) (ES)
(72) Inventor: Tenias Sancho, Javier, 50600 Ejea de los Caballeros, Zaragoza (ES)
(74) Representative: Davila Baz, Angel

(56) References cited:
- ES-A- 2 017 249
- ES-A- 2 130 879
- FR-A- 2 281 056
- US-A- 3 473 310
- US-A- 3 596 455
- US-A- 3 683 617
- US-A- 4 194 347
- US-A- 6 070 402

## Description

The present invention relates to a machine for harvesting tree fruit, which comprises a structure mounted on wheels bearing a tree shaker and a fruit peeler, as well as storage containers.

Machines with this function are already known from e.g. US-A-3 473 310.

These machines have a limited performance, due to the time which passes between the end of shaking of one tree and the moment in which the machine is ready and coupled to the following tree. In addition, more than one person is generally required for its operation.

The object of the present invention is a machine meant for the aforementioned purpose, constructed so that it can obtain a high performance as no preparation is required between the end of shaking one tree and the start of the following tree, with the various stages of approaching the tree, coupling to it, shaking, collection and peeling of the fruit performed in a continuous manner, without having to stop the machine, allowing a quick and efficient harvesting of the fruit. Additionally, the machine of the invention may be self-powered or towed, and in any case it can be operated by a single person.

According to the invention the structure of the machine comprises two parallel vertical gantries connected through the bottom end of their side arms by two longitudinal frames which run inside said arms. Each frame runs between the two arms on the same side of the two frames, and is provided with a rear container for storing peeled fruits, after which is placed a peeler. The two frames are separated by a distance which is slightly greater than the width of the largest trunks of the harvested trees.

The two frames form closed upper surfaces inclined transversely in a downwards sense towards the inner edge, defining two fruit collection trays which output towards the separation between the frames. On their bottom each tray ends in a longitudinal lower duct with a feed screw, each ending at the input of its peeler. The inclined trays output on these ducts and the screws drive the fruit towards the corresponding peeler.

One frame is provided above the fruit collection tray with longitudinal guides along which may move a shaker, with clamps which can move transversely above the separation between the two longitudinal frames, which clamps are mobile so that they may engage and release the trees, as described further below.

The separation between frames is further crossed by a feeler which by means of an electric or hydraulic system is in charge of activating the shaker when it meets a tree trunk. The shaker stops by means of an adjustable timer, obtaining the time required for each type of tree to be shaken.

The longitudinal guides on which the shaker is mounted may consist of a bar placed parallel to the inner edge of the trays, on whose bar may move the shaker, which is also connected to a hydraulic drive cylinder for its motion along the guides.

The separation between frames is spanned by flexible straps which extend from the screw grooves forming a span roof which encloses said separation.

According to an alternative embodiment, the machine may be provided at the rear, immediately behind each frame, with a storage hopper. After this hopper is the peeler of the corresponding side, which outputs on the hopper. Beneath the hopper extends the longitudinal duct and feed screw until reaching and outputting on the peeler of the same side.

With this construction the structure of the machine is not altered nor interfered with, as the peeled fruit storage hopper are placed after it, and it is only necessary to extend the longitudinal duct and feed screw under said hoppers.

In this manner the machine is provided with storage containers for peeled fruits which do not change the general structure of the machine and offer a large capacity with simple emptying and filling processes, simplifying discharge to storage and/or transportation means.

These and further characteristics of the invention may be understood better in view of the following description made with reference to the accompanying drawings, in which is shown for purposes of illustration only an example of an embodiment.

In these drawings:
Figure 1 is a front elevation view of the machine.
Figure 2 is a rear elevation view of the same machine.
Figures 3 and 4 are front and rear perspective views of the machine.
Figures 5 and 5a are enlarged perspective views of the shaker mechanism.
Figure 6 is an enlarged perspective view of part of the shaker, the feeler and one of the feed screws.
Figure 7 is a perspective view of one of the feelers included in the machine of the invention.
Figure 8 is a front elevation view of an alternative embodiment of the machine.
Figure 9 is a front perspective view of the machine shown in figure 8.
Figure 10 is a rear perspective view of the machine of figure 8 with the hoppers in their loading position.
Figure 11 is a partial rear perspective view of the machine of figure 8 with the hoppers in their discharge position.

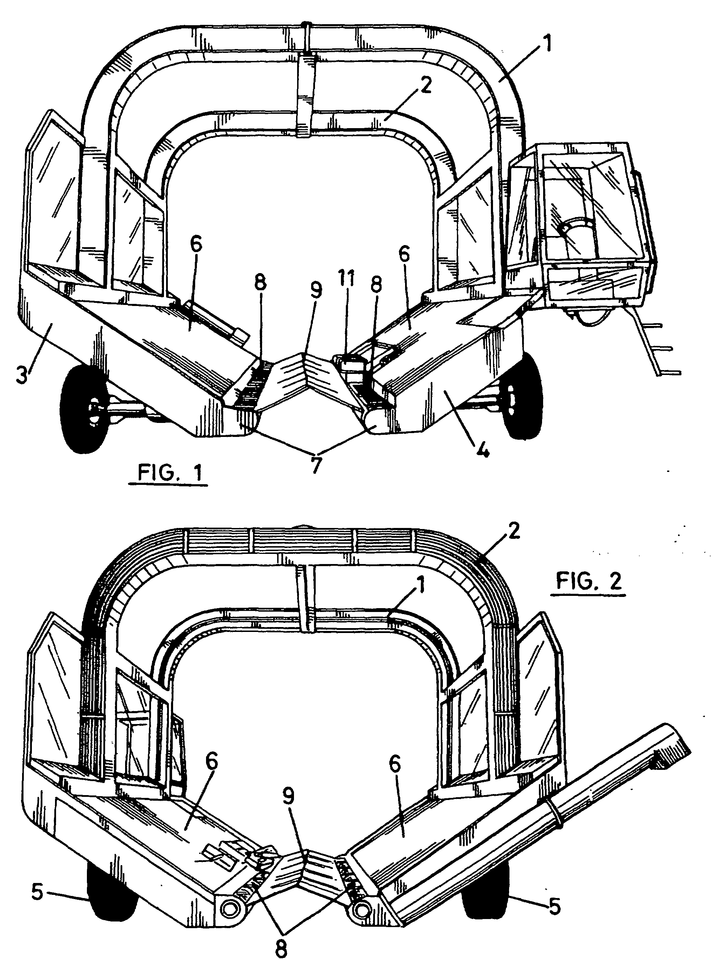

As may be seen in figures 1 to 7, the machine of the invention includes a structure comprising two parallel vertical gantries labelled (1) and (2). These gantries are connected on the bottom end of their side arms by frames labelled in general as (3) and (4), which in turn bear lower support wheels (5) for moving the machine.

Frames (3) and (4) run inside side arms of gantries (1) and (2) with a downwards inclination towards the centre of the machine, and are closed on the top by continuous surfaces (6) which define fruit collection trays. Each frame (3) and (4) includes after the trays (6) corresponding ducts (7) inside which run feed screws (8).

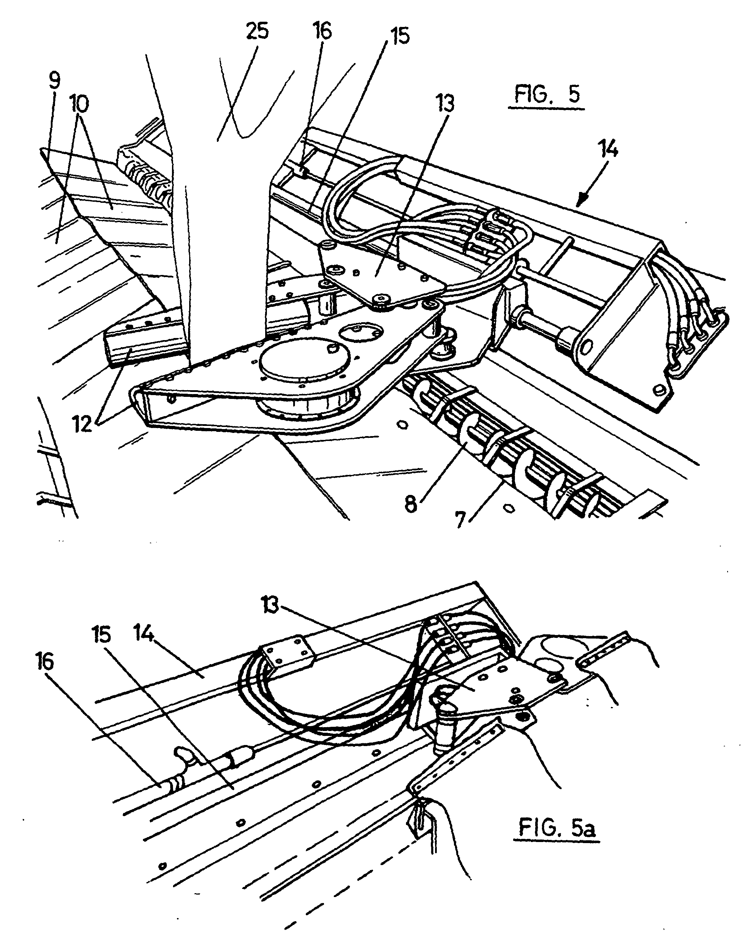

Structures (3) and (4) are separated on the inside by a distance which is slightly large than the width of the trees to be harvested. This separation is enclosed by a span roof (9) which, as may be seen in figure 5, comprises flexible straps (10) which extend from the inner edge of ducts (7).

One of the frames, labelled (4) in the example described, carries above tray (6) a shaker (11) which is described in greater detail with reference to figures 5 and 5a.

Shaker (11) comprises clamps (12) which in their shaking position span transversely the separation between frames (3) and (4) above roof (9). Said shaker is mounted through its body (13) on a support (14) which comprises a bar (15) parallel to ducts (7) and screws (8), along which may travel said body (13). In addition, this body is connected to a hydraulic cylinder (16) which drives the shaker unit along bar (15).

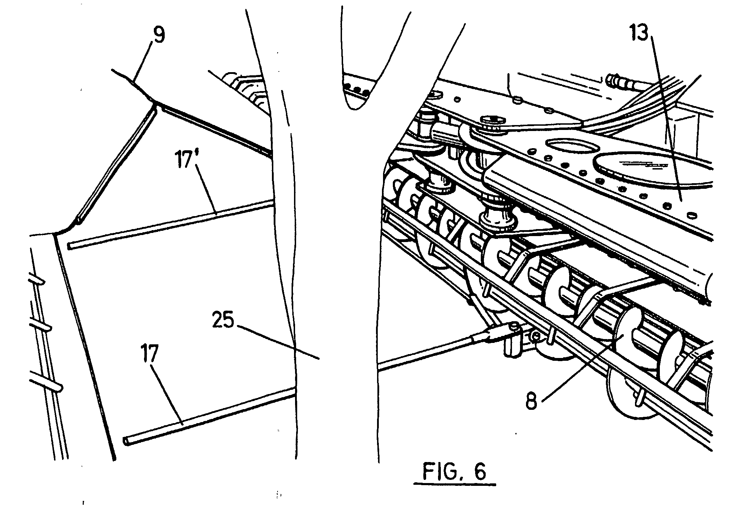

The separation between frames (3) and (4) is spanned by a feller (17), figure 6, which comprises a rod jointed to one of the frames, under the screw ducts. This feeler, by means of an electric and hydraulic system, is in charge of activating and operating cylinder (16) which drives the shaker, as well as opening its clamps (12) as described further below.

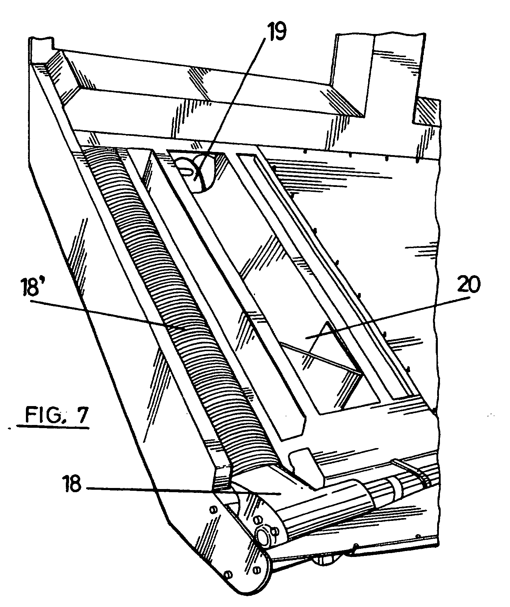

Screws (8) are meant to carry the dislodged fruit collected by trays (6) to peelers (18) which are mounted on the rear of the frames. These peelers are shown in figure 7 and include a grille (18') through which the peel rinds are expelled leaving the fruit free of its peel. Clean fruits are deposited by means of an endless screw (19) directly from each peeler in a container (20).

With the above construction, in order to harvest fruit the machine is driven so that the trunk of the tree to be shaken labelled as (25) in figures 5 and 6 us opposite the separation between frames (3) and (4), advancing the machine so that the trunk enters until it reaches feeler (17), at which time the shaker is activated, closing its clamps (12) until they rest and press on tree trunk (25), immediately followed by the shaking operation as the cylinder in charge of driving said shaker is activated, which occurs with a speed equal to that of the displacement of the machine. This shaking operation lasts for a time which depends on the type of tree shaken and is controlled by an adjustable timer or by a feller (17') which is in charge of opening clamps (12) and which release the tree trunk, allowing the machine to continue its path without interference from the trunk. After this the hydraulic cylinder (16) moves the shaker in the opposite direction thus leaving the machine ready for a new operation.

A machine is thus provided in which the various processes take place without requiring any stoppages, enabling successive shakings without stopping the machine.

The machine of the invention is particularly applicable to all types of fruit trees by simply changing the feed screws and the type of feeler, in view of the fruit to be harvested.

The machine of the invention may be provided with driving means or be towed by a tractor or any other harvester mechanism.

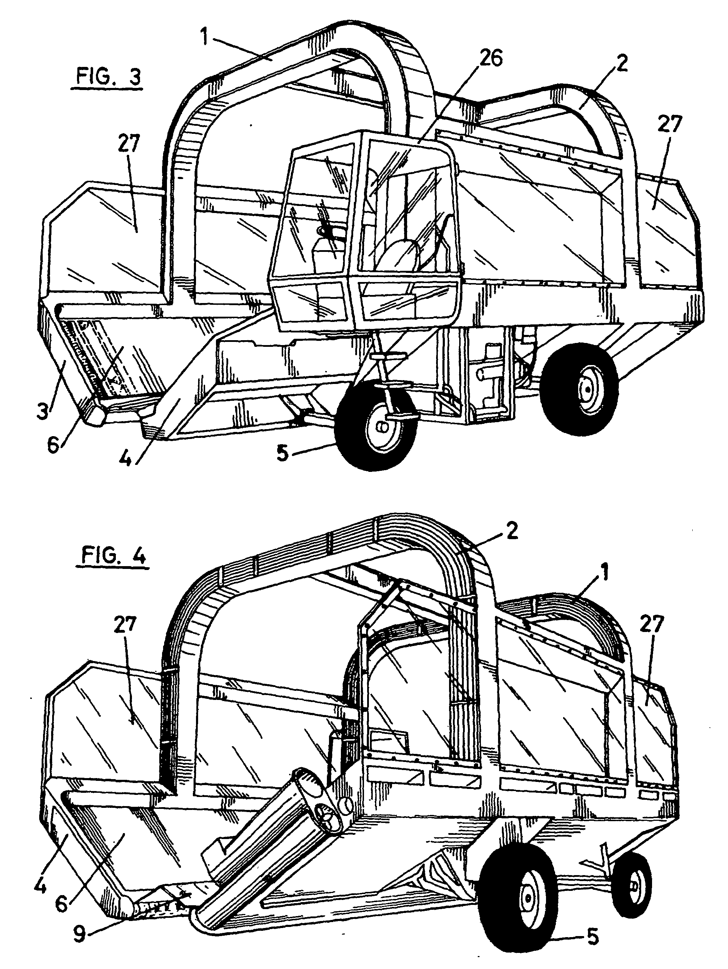

As shown in figures 1 and 3 the machine also includes a control cab (26) and side enclosures (27) above frames (3) and (4).

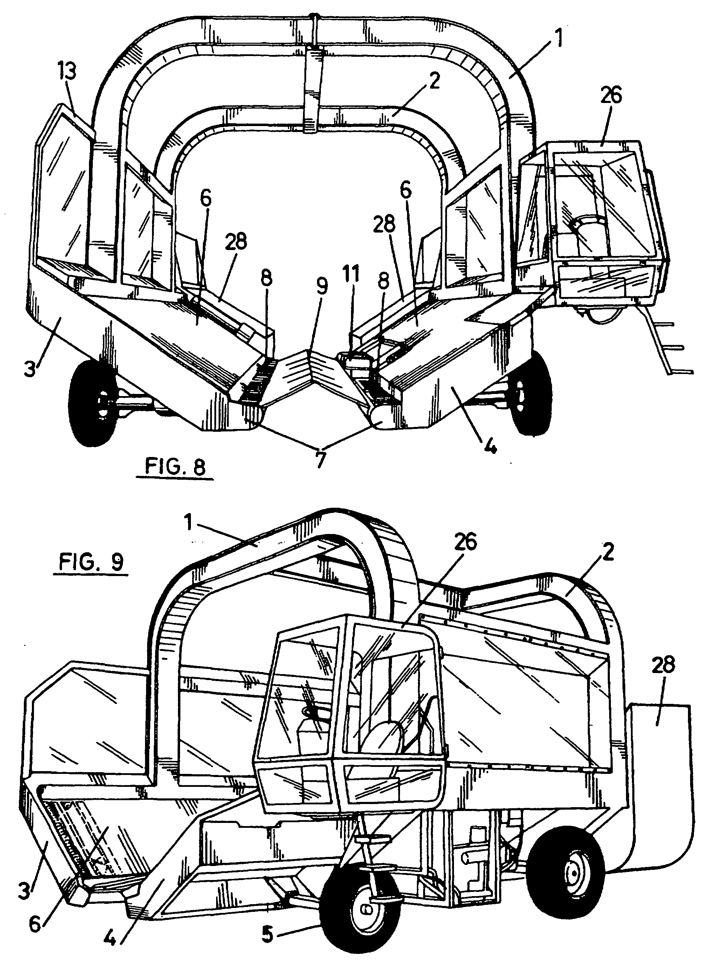

According to the embodiment of figures 8 to 11, the machine includes in its rear after each frame (3) and (4) a storage hopper (28), under which extend ducts (7) and feed screws (8). After these hoppers are located peelers (29) which have a known construction.

Ducts (7) with the corresponding screws (8) discharge in peelers (29), which in turn discharge in hoppers (28).

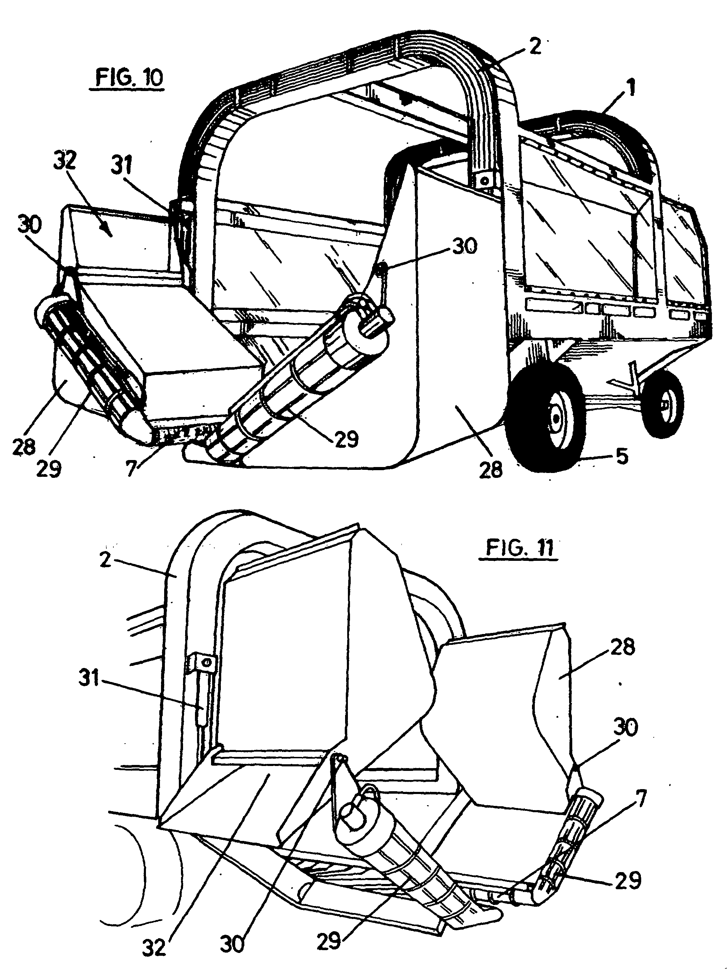

As can be better seen in figures 10 and 11, hoppers (28) are mounted on rocking axes (30) and connected to drive cylinders (31). Above axes (30) the hoppers are provided with an opening or discharge nozzle (32). Hoppers (28) may turn on axis (30) between a storage position shown in figure 10, in which the discharge opening (32) is placed above axis (30), and a discharge position shown in figure 11 in which they are in inverted positions with opening (32) beneath axis (30). The hoppers are moved from one position to another by the action of drive cylinders (31).

With this arrangement the machine is provided, behind each structure (3) and (4), with a large capacity container without affecting the structure or overall construction of the machine.

Additionally, emptying of the hoppers (28) is achieved by the machine's own means, using cylinders (31) to place the hoppers in an inverted position, in which position discharge opening (32) is placed at a height so that the fruit can be directly received by containers or packages, or by trailers or other transporting vehicles.

## Claims

1. Machine for harvesting tree fruit which includes a structure mounted on wheels which is provided with a tree shaker, fruit peeler and storage hoppers, the structure comprising two parallel vertical gantries (12) joined at the bottom end of their side arms by means of two frames (34) which run inside said arms, between each two arms on the same side, and which are separated longitudinally by a distance which is greater than the width of the tree trunks; **characterised in that** said frames have closed upper surfaces inclined transversely downwards towards their inner edge, in order to define fruit collection trays (16) which on the bottom end at longitudinal ducts with feed screws (8) on which discharge said fruit collection trays; with one of the frames further provided above the fruit collection tray with longitudinal guides along which may move the shaker (11), the clamps (12) of which are placed above the separation between the longitudinal frames; with said separation spanned by a feeler (17) which is in charge of activating the shaker and shaker drive cylinder (16) when a tree trunk meets said feeler.

2. Machine as claimed in claim 1, **characterised in that** said feeler (17) comprises a rod jointed to one of the frames, which rod spans the distance between the longitudinal frames beneath the ducts with screws.

3. Machine as claimed in claim 1 **characterised in that** the longitudinal guides on which is mounted the shaker (11) consist of a bar parallel to the inner edge of the trays on which can move said shaker, which shaker is provided with a hydraulic drive cylinder in order to travel along the bar.

4. Machine as claimed in claim 1 **characterised in that** from one of the ducts with feed screws (8) extend opposing flexible straps (10) inclined upwards, which define a span roof which covers the separation between the longitudinal frames.

5. Machine as claimed in claim 1 **characterised in that** the peelers are mounted on the rear of the trays (16) and discharge on the storage hoppers.

6. Machine as claimed in claim 1 **characterised in that** it is provided on its rear, immediately behind each frame (34), with a storage hopper after which is placed a peeler, with the longitudinal duct and feed screw extending beneath said hopper as far as said peeler, which in turn discharges on the hopper; which hopper is mounted on a horizontal rocking axis parallel to the longitudinal axis of the structure and is connected to a drive cylinder, with said hopper provided with a discharge opening which is located above the rocking axis.

## Patentansprüche

1. Baumobst-Erntemaschine, die eine auf Rädern montierte Konstruktion enthält, welche mit einer Baumschüttelvorrichtung, einer Obstschälvorrichtung und einem Speicherbunker ausgestattet ist, wobei die Konstruktion zwei parallele vertikale Gerüste (12) enthält, die am unteren Ende ihrer seitlichen Arme mittels zweier Rahmen (34), die im Inneren der Arme zwischen jeweils zwei Armen auf derselben Seite verlaufen, verbunden sind und die in Längsrichtung durch einen Abstand voneinander getrennt sind, der größer ist als die Breite der Baumstämme; **dadurch gekennzeichnet, dass** die Rahmen geschlossene Oberseiten aufweisen, die in Querrichtung zu ihrer Innenkante hin abwärts geneigt sind, um Obstauffangvorrichtungen (16) am unteren Ende von Längsschächten mit Förderschnecken (8) zu definieren, in die sich die Obstauffangvorrichtungen entleeren; wobei einer der Rahmen des Weiteren oberhalb der Obstauffangvorrichtung mit Längsführungen versehen ist, an denen entlang sich die Schüttelvorrichtung (11) bewegen kann, deren Klemmvorrichtungen (12) oberhalb der Trenneinrichtung zwischen den Längsrahmen angeordnet sind; wobei die Trenneinrichtung von einem Fühler (17) überspannt wird, der die Aufgabe hat, die Schüttelvorrichtung und den Antriebszylinder (16) der Schüttelvorrichtung zu aktivieren, wenn ein Baumstamm den Fühler berührt.

2. Maschine nach Anspruch 1, **dadurch gekennzeichnet, dass** der Fühler (17) eine Stange umfasst, die an einem der Rahmen befestigt ist und die den Abstand zwischen den Längsrahmen unter den Schächten mit Förderschnecken überspannt.

3. Maschine nach Anspruch 1, **dadurch gekennzeichnet, dass** die Längsführungen, an denen die Schüttelvorrichtung (11) angebracht ist, aus einer parallel zur Innenkante der Auffangvorrichtungen verlaufenden Stange bestehen, an der entlang sich die Schüttelvorrichtung bewegen kann, wobei die Schüttelvorrichtung mit einem hydraulischen Antriebszylinder versehen ist, der die Schüttelvorrichtung an der Stange entlang bewegt.

4. Maschine nach Anspruch 1, **dadurch gekennzeichnet, dass** sich von einem der Schächte mit Förderschnecken (8) einander gegenüberliegende flexible, schräg aufwärts gerichtete Streifen (10) erstrecken, die ein Spanndach definieren, welches die Trenneinrichtung zwischen den Längsrahmen bedeckt.

5. Maschine nach Anspruch 1, **dadurch gekennzeichnet, dass** die Schälvorrichtungen an der Rückseite der Auffangvorrichtungen (16) angebracht sind und sich in die Speicherbunker entleeren.

6. Maschine nach Anspruch 1, **dadurch gekennzeichnet, dass** an ihrer Rückseite, unmittelbar hinter jedem Rahmen (34), ein Speicherbunker angeordnet ist, hinter dem sich eine Schälvorrichtung befindet, wobei sich der Längsschacht und die Förderschnecke unterhalb des Bunkers über die Ausmaße der Schälvorrichtung hinweg erstrecken, welche sich wiederum in den Bunker entleert, wobei der Bunker auf einer horizontalen Rüttelachse parallel zur Längsachse der Konstruktion angeordnet ist und mit einem Antriebszylinder verbunden ist, wobei der Bunker mit einer Entleerungsöffnung versehen ist, die oberhalb der Rüttelachse angeordnet ist.

## Revendications

1. Machine pour la récolte des fruits qui comprend une structure montée sur des roues qui est prévue avec un secoueur d'arbre, une machine à éplucher les fruits et des trémies de stockage, la structure comprenant deux portiques (12) verticaux parallèles rassemblés au niveau de l'extrémité inférieure de leurs bras latéraux au moyen de deux châssis (34) qui s'étendent à l'intérieur desdits bras, entre chacun des deux bras du même côté, et qui sont séparés longitudinalement par une distance qui est supérieure à la largeur des troncs d'arbre, **caractérisée en ce que** lesdits châssis ont des surfaces supérieures fermées inclinées de manière transversale vers le bas vers leur bord interne, afin de définir des plateaux de collecte de fruits (16) qui se situent sur l'extrémité inférieure au niveau des conduites longitudinales dotées de vis sans fin d'alimentation (8) sur laquelle se déchargent lesdits plateaux de collecte de fruit : avec l'un des châssis prévu en outre au dessus du plateau de collecte de fruits avec des guides longitudinaux le long desquels le secoueur (11) peut se déplacer, dont les pinces (12) sont placées au dessus de la séparation située entre les châssis longitudinaux, avec ladite séparation couverte par un palpeur (17) qui doit se charger d'activer le secoueur et le cylindre d'entraînement (16) du secoueur, lorsqu'un tronc d'arbre rencontre ledit palpeur.

2. Machine selon la revendication 1, **caractérisée en ce que** ledit palpeur (17) comprend une tige assemblée à l'un des châssis, dont la tige couvre la distance entre les châssis longitudinaux au dessous des conduites dotées de vis.

3. Machine selon la revendication 1, **caractérisée en ce que** les guides longitudinaux sur lesquels est monté le secoueur (11), se composent d'une barre parallèle au bord interne des plateaux sur lesquels peut se déplacer ledit secoueur, dont le secoueur est prévu avec un cylindre d'entraînement hydraulique afin de se déplacer le long de la barre.

4. Machine selon la revendication 1, **caractérisée en ce qu'**à partir de l'une des conduites dotées de vis sans fin d'alimentation (8), s'étendent des chapeaux en tôle ondulée (10) flexibles opposés inclinés vers le haut, qui définissent un toit à deux versants qui couvre la séparation entre les châssis longitudinaux.

5. Machine selon la revendication 1, **caractérisée en ce que** les machines à éplucher sont montées à l'arrière des plateaux (16) et se déchargent sur les trémies de stockage.

6. Machine selon la revendication 1, **caractérisée en ce qu'**elle est équipée à l'arrière, immédiatement derrière chaque châssis (34), avec une trémie de stockage après laquelle on place une machine à éplucher, avec la conduite longitudinale et la vis sans fin d'alimentation s'étendant au dessous de ladite trémie tant que ladite machine à éplucher, qui à son tour se décharge sur la trémie, dont la trémie est montée sur un axe basculant parallèle à l'axe longitudinal de la structure et est raccordée à un cylindre d'entraînement, avec ladite trémie prévue avec une ouverture de déchargement qui est située au dessus de l'axe basculant.
